# NOUVEAU FASCICULE DE BREVET EUROPEEN

(11) **EP 1 760 357 B2**
(45) Date de publication et mention de la décision concernant l'opposition: **20.01.2016**
(45) Mention de la délivrance du brevet: 14.04.2010
(21) Numéro de dépôt: 06118313.3
(22) Date de dépôt: 02.08.2006
(51) Int. Cl.: F16F 15/129

(54) **Embrayage à friction perfectionné, notamment pour véhicule automobile, comportant des moyens de frottement différenciés.**
Reibungskupplung, insbesondere für Kraftfahrzeuge mit unterschiedlichen Reibungsmitteln
Friction clutch, in particular for motor vehicle, comprising differentiated friction means

(30) Priorité: 31.08.2005 FR 0552640
(43) Date de publication de la demande: 07.03.2007
(73) Titulaire: Valeo Embrayages, 80009 Amiens (FR)
(72) Inventeur: Graton, Michel c/o VALEO EMBRAYAGES, 75020 Paris (FR); Fafet, Olivier c/o VALEO EMBRAYAGES, 80000 Amiens (FR); Minereau, Hugues c/o VALEO EMBRAYAGES, 93240 Stains (FR)
(74) Mandataire: Tran, Chi-Hai

(56) Documents cités:
- EP-A- 0 361 458
- FR-A- 2 628 808
- FR-A- 2 854 671
- FR-A1- 2 854 671

## Description

La présente invention concerne un embrayage à friction perfectionné, notamment pour véhicule automobile, comportant des moyens de frottement différenciés.

Dans un véhicule automobile, un embrayage à friction a pour fonction de transmettre un couple entre un élément rotatif d'entrée et un élément rotatif de sortie, par pincement de la friction entre un plateau de pression et un volant moteur.

En général, l'élément d'entrée est formé par un disque de friction et l'élément de sortie est formé par un moyeu destiné notamment à être couplé à un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques et des moyens de frottement.

On connaît déjà dans l'état de la technique, notamment d'après FR 2 854 671 (FR 03 05452), un embrayage à friction, en particulier pour véhicule automobile, du type comprenant au moins un amortisseur comportant :
- deux rondelles de guidage, solidaires en rotation entre elles,
- un voile annulaire coaxial aux rondelles de guidage et mobile en rotation par rapport aux rondelles de guidage, et
- des moyens d'amortissement à activation conditionnelle, activés ici lorsque le débattement angulaire entre les rondelles de guidage et le voile est supérieur à un angle seuil prédéterminé, comportant des moyens de frottement à activation conditionnelle,
les moyens de frottement à activation conditionelle d'un premier amortisseur comprenant :
- des première et seconde rondelles de frottement agencées de part et d'autre du voile du premier amortisseur, et
- des moyens d'entretoisement axial des première et seconde rondelles de frottement.

Habituellement, le premier amortisseur forme un amortisseur principal de l'embrayage, ce dernier comportant également un second amortisseur formant un pré-amortisseur couplé en série avec l'amortisseur principal.

Chaque amortisseur comporte en outre des moyens d'amortissement à activation immédiate, activés dès que débute le débattement angulaire entre les rondelles de guidage et le voile de cet amortisseur. Ces moyens d'amortissement à activation immédiate comportent chacun des moyens de frottement à activation immédiate.

Dans FR 2 854 671, la première rondelle de frottement forme un organe de frottement commun aux moyens de frottement à activation immédiate et aux moyens de frottement à activation conditionnelle de l'amortisseur principal.

En effet, la première rondelle de frottement est intercalée axialement entre une rondelle de guidage de l'amortisseur principal et une rondelle en matière plastique des moyens de frottement à activation immédiate, solidaire en rotation avec le voile.

Ainsi, la première rondelle de frottement comporte une première face en contact de frottement avec la rondelle en plastique lorsque les moyens de frottement à activation immédiate sont activés et une seconde face en contact de frottement avec la rondelle de guidage de l'amortisseur principal lorsque les moyens de frottement à activation conditionnelle sont activés.

La première rondelle de frottement subit donc des frottements aussi bien lorsque les moyens à activation immédiate sont activés que lorsque les moyens à activation conditionnelle sont activés, ce qui limite sa durée de vie.

Par ailleurs, la première rondelle de frottement étant intercalée de façon frottante entre la rondelle de guidage de l'amortisseur principal et la rondelle en plastique, sa déformation, par exemple sous l'effet de la dilatation due à la température, est limitée, ce qui engendre des contraintes supplémentaires de pincement limitant également sa durée de vie.

L'invention a notamment pour but d'augmenter la durée de vie de la première rondelle de frottement d'un embrayage à friction du type précité.

A cet effet, l'invention a pour objet un embrayage à friction du type précité comportant des moyens d'entretoisement ménageant un dégagement axial entre deux faces en vis à vis de la première rondelle de frottement et du voile du premier amortisseur.

La face de la rondelle de frottement en vis à vis du voile du premier amortisseur est libre et ne subit donc aucun frottement. Seule l'autre face de la rondelle de frottement est susceptible de subir des frottements.

De plus, le dégagement axial ménagé par les moyens d'entretoisement autorise des déformations de la première rondelle de frottement sans que des contraintes de pincement soient générées dans cette rondelle de frottement.

Ainsi, on limite l'usure subie par la première rondelle de frottement.

Un embrayage selon l'invention peut en outre comporter l'une ou plusieurs des caractéristiques suivantes :
- les moyens de frottement à activation immédiate de l'amortisseur principal et du pré-amortisseur comprenant un organe de frottement commun ;
- l'organe de frottement commun est destiné à coopérer par frottement avec, d'une part, un moyeu formant un élément de sortie générale de l'embrayage, lorsque les moyens de frottement de pré-amortisseur à activation immédiate sont activés, et d'autre part, le voile de l'amortisseur principal, lorsque les moyens de frottement de l'amortisseur principal à activation immédiate sont activés ;
- l'organe de frottement commun a une forme générale annulaire, la première rondelle de frottement entourant cet organe de frottement commun ;
- les moyens d'entretoisement forment également des moyens de solidarisation en rotation des première et seconde rondelles de frottement ;
- les moyens d'entretoisement comportent au moins une patte d'entretoisement, venue de matière avec la première rondelle de frottement, munie d'une extrémité de liaison avec la première rondelle de frottement et d'une extrémité libre de coopération avec la seconde rondelle de frottement ;
- les moyens d'amortissement à activation conditionnelle du premier amortisseur comportent un groupe d'organes élastiques à activation conditionnelle transmettant un couple entre les rondelles de guidage et le voile selon le débattement angulaire entre ces rondelles de guidage et le voile, la première rondelle de frottement étant munie d'au moins une patte d'activation de cette rondelle de frottement, coopérant angulairement avec un organe élastique à activation conditionnelle correspondant, la patte d'activation étant venue de matière avec la rondelle de frottement ;
- la première rondelle de frottement est sensiblement plane e fabriquée dans une tôle métallique ;
- la patte d'activation est délimitée par une surface de contact avec l'organe élastique à activation conditionnelle correspondant, formée par la tranche de la rondelle de frottement ;
- la patte d'activation comporte un siège de contact avec l'organe élastique à activation conditionnelle correspondant formé par un bord tombé de la première rondelle de frottement ;
- le siège et la patte d'entretoisement sont formés par un même bord tombé de la première rondelle de frottement délimité par une ligne de pliage continue ;
- le sièges et la patte d'entretoisement sont formés par des bords tombés de la première rondelle de frottement délimités par des lignes de pliage séparées ;
- la patte d'activation est délimitée par une surface de contact comportant une première partie, formée par un bord tombé de la première rondelle de frottement, de contact avec le voile, et une seconde partie, formée par la tranche de la première rondelle de frottement, de contact avec l'organe élastique à activation conditionnelle correspondant ;
- moyens d'amortissement à activation conditionnelle sont agencés de sorte à être activés lorsque le débattement angulaire entre la rondelle de guidage et le voile est supérieur à un angle seuil prédéterminé ;
- moyens d'amortissement à activation conditionnelle sont agencés de sorte à être activés lorsque le débattement angulaire s'(effectue selon un sens de rotation prédéterminé.

L'invention sera mieux comprise à la lecture de la description qui va suivre, donnée uniquement à titre d'exemple et faite en se référant aux dessins annexés dans lesquels :
- la figure 1 est une demi-vue en coupe axiale d'un embrayage à friction selon l'invention ;
- la figure 2 est une vue en perspective éclatée de l'embrayage de la figure 1 ;
- la figure 3 est une vue en perspective d'une rondelle de frottement de moyens d'amortissement à activation conditionnelle d'un amortisseur principal de l'embrayage à friction de la figure 1 ;
- les figures 4 à 7 sont des vues similaires à celle de la figure 3 de variantes d'une rondelle de frottement de l'embrayage.

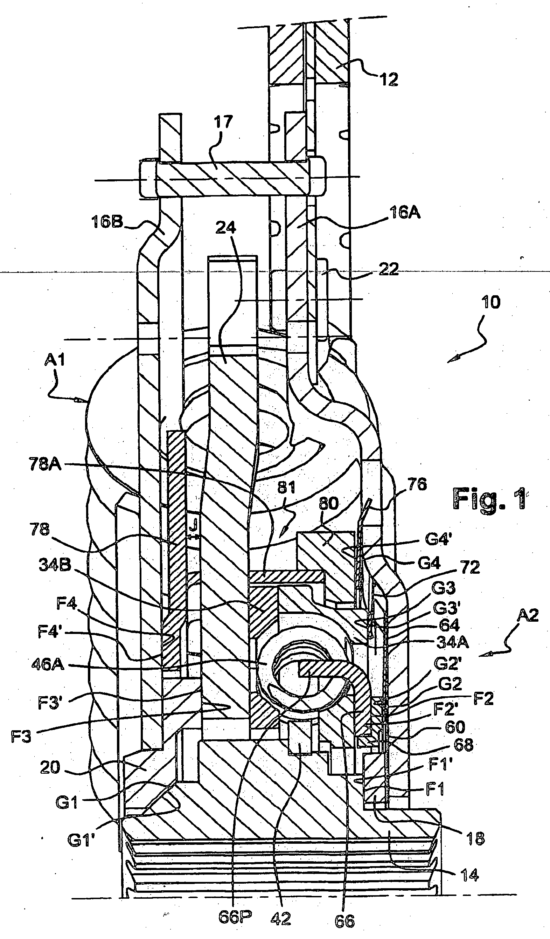

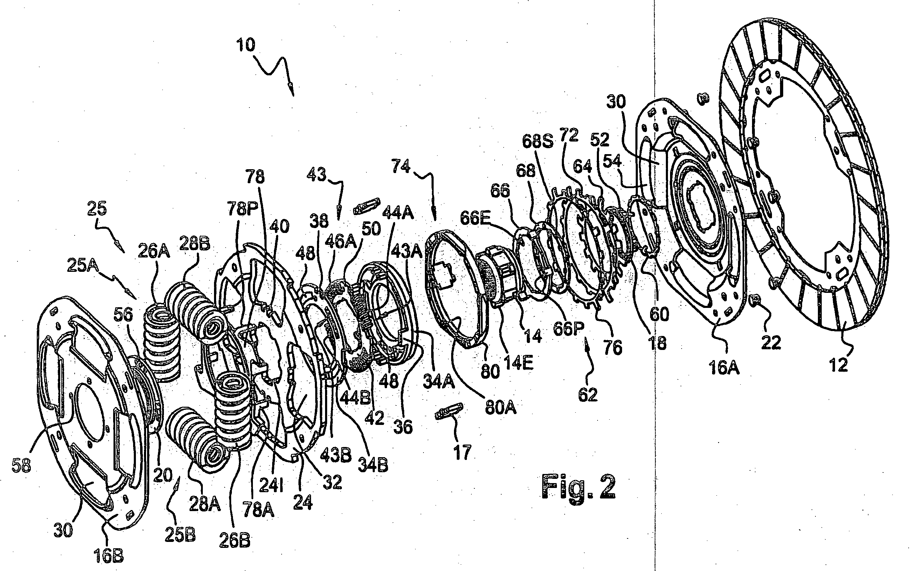

On a représenté sur les figures 1 et 2 un embrayage à friction selon un exemple de mode de réalisation de l'invention. Dans l'exemple décrit, l'embrayage est destiné à équiper un véhicule automobile.

L'embrayage à friction comprend un dispositif à friction 10, destiné à transmettre un couple entre un volant moteur solidaire en rotation d'un arbre menant, tel que le vilebrequin d'un moteur à combustion interne, et un arbre mené tel que l'arbre d'entrée d'une boîte de vitesses.

Le dispositif à friction 10 est muni de moyens d'amortissement comportant un amortisseur principal A1 et un pré-amortisseur A2. Ces amortisseurs A1, A2 sont couplés en série entre un élément rotatif d'entrée générale, tel qu'un disque de friction 12, et un élément rotatif de sortie générale, tel qu'un moyeu interne 14, de forme générale annulaire, ces éléments d'entrée et de sortie étant sensiblement coaxiaux.

De façon connue, le disque de friction 12 est destiné à être serré entre le volant moteur et un plateau de pression actionné par des moyens embrayeurs. Le moyeu interne 14 comprend des cannelures longitudinales internes permettant de le solidariser en rotation avec une extrémité de l'arbre mené.

Chaque amortisseur A1, A2 est muni d'éléments rotatifs d'entrée et de sortie, un couple entrant par l'élément d'entrée étant transmis à l'élément de sortie après amortissement.

L'élément d'entrée de l'amortisseur principal A1 est l'élément d'entrée générale du dispositif à friction 10, c'est à dire le disque de friction 12.

L'amortisseur principal A1 comprend des première 16A et seconde 16B rondelles de guidage, solidarisées en rotation entre elles à l'aide de moyens classiques 17. Ces rondelles de guidage 16A, 16B sont montées en rotation sur le moyeu 14 au moyen de paliers annulaires 18, 20 respectivement. Le disque de friction 12 est fixé sur la première rondelle de guidage 16A au moyen de rivets 22.

Un voile annulaire 24 est intercalé axialement entre les deux rondelles de guidage 16A, 16B, co-axialement à celles-ci. Ce voile annulaire 24 comporte, en périphérie interne, une denture 241 qui engrène, avec un jeu circonférentiel prédéterminé, avec une denture correspondante 14E de la périphérie externe du moyeu 14. La denture interne 24I du voile 24 forme des saillies sensiblement radiales destinées à coopérer avec des évidements complémentaires externes du moyeu 14.

L'amortisseur principal A1 comporte également des moyens d'amortissement 25 destinés à amortir des vibrations en provenance du moteur. Ces moyens d'amortissement 25 comportent des moyens 25A d'amortissement à activation immédiate, activés dès que débute le débattement angulaire entre les rondelles de guidage 16A, 16B et le voile 24, et des moyens 25B d'amortissement à activation conditionnelle, activés ici lorsque le débattement angulaire entre les rondelles de guidage 16A, 16B et le voile annulaire 24 dépasse un angle seuil prédéterminé à partir d'une position de repos, dit angle seuil d'amortisseur principal A1.

Les moyens d'amortissement 25 comportent des organes élastiques à action circonférentielle, tels que des ressorts hélicoïdaux 26A, 26B, 28A, 28B de forte raideur, logés dans des fenêtres 30 des rondelles de guidage 16A, 16B et dans des fenêtres 32 du voile annulaire 24. Les organes élastiques 26A, 26B, 28A, 28B sont répartis en deux groupes.

Les moyens d'amortissement à activation immédiate 25A comportent des organes élastiques 26A, 26B d'un premier groupe, dits organes élastiques à activation immédiate, logés sans jeu circonférentiel dans les fenêtres 30 des rondelles de guidage 16A, 16B et dans les fenêtres 32 du voile annulaire 24. Ils participent à la transmission d'un couple de rotation entre les rondelles de guidage 16A, 16B et le voile 24 dès le début d'une rotation relative entre le disque de friction 12 et le moyeu 14.

Les moyens d'amortissement à activation conditionnelle 25B comportent des organes élastiques 28A, 28B d'un second groupe, dits organes élastiques à activation conditionnelle, logés sans jeu circonférentiel dans les fenêtres 30 des rondelles de guidage 16A, 16B et avec un jeu circonférentiel prédéterminé dans les fenêtres 32 du voile annulaire 24. Les organes élastiques 28A, 28B du second groupe sont activés de façon conditionnelle pour assurer la transmission d'un couple de rotation que lorsque le débattement angulaire entre les rondelles de guidage 16A, 16B et le voile annulaire 24, ici, dépasse l'angle seuil d'amortisseur principal A1. On notera que cet angle seuil d'amortisseur principal A1 correspond au jeu circonférentiel entre les organes élastiques 28A, 28B et les fenêtres 32 du voile 24.

Ainsi les organes élastiques 26A, 26B du premier groupe sont activés de façon immédiate pour transmettre le couple en permanence, et les organes élastiques 28A, 28B du second groupe sont activés de façon conditionnelle pour ici transmettre le couple uniquement lorsque le débattement angulaire entre les rondelles de guidage 16A, 16B et le voile annulaire 24 est supérieure à l'angle seuil d'amortisseur principal A1.

Le pré-amortisseur A2 relie le voile annulaire 24 de l'amortisseur principal A1 et le moyeu 14.

Le pré-amortisseur A2 comprend des première 34A et seconde 34B rondelles de guidage. Ces rondelles de guidage 34A, 34B sont solidarisées en rotation avec le voile 24 et accrochées sur ce voile 24 à l'aide de pattes axiales 36 ménagées à la périphérie de la première rondelle de guidage 34A.

En effet, les pattes 36 sont emboîtées dans des encoches complémentaires 38, 40 de solidarisation en rotation ménagées respectivement sur les contours de la seconde rondelle de guidage 34B et des fenêtres 32 du voile 24. Par ailleurs, les extrémités libres des pattes 36 coopèrent par encliquetage avec les contours des fenêtres 32 pour solidariser axialement les première 34A et seconde 34B rondelles de guidage au voile 24.

Dans le mode de réalisation représenté, les rondelles de guidage 34A, 34B sont en matière plastique, éventuellement renforcée de fibres.

Un voile annulaire 42 de pré-amortisseur est intercalé axialement entre les deux rondelles de guidage 34A, 34B, co-axialement à celles-ci. Ce voile annulaire 42 est solidaire en rotation du moyeu 14, par exemple par engrènement avec la denture périphérique externe 14E de ce moyeu.

On notera que les pattes 36 enjambent le voile 42 sans gêner le mouvement relatif entre les rondelles de guidage 34A, 34B et le voile 42.

Le pré-amortisseur A2 comporte également des moyens d'amortissement 43 destinés à amortir des vibrations en provenance du moteur. Ces moyens d'amortissement 43 de pré-amortisseur A2 comportent des moyens 43A d'amortissement à activation immédiate, activés dès que débute le débattement angulaire entre les rondelles de guidage 34A, 34B et le voile 42 du pré-amortisseur A2, et des moyens 43B d'amortissement à activation conditionnelle, activés ici lorsque le débattement angulaire entre les rondelles de guidage 34A, 34B et le voile annulaire 42 du pré-amortisseur A2 dépasse un angle seuil prédéterminé à partir d'une position de repos, dit angle seuil de pré-amortisseur A2.

Les moyens d'amortissement 43 comportent des organes élastiques à action circonférentielle, tels que des ressorts hélicoïdaux 44A, 44B, 46A, 46B de raideur relativement faible, logés dans des fenêtres 48 des rondelles de guidage 34A, 34B et dans des fenêtres 50 du voile annulaire 42. De façon analogue à l'amortisseur principal A1, les organes élastiques 44A, 44B, 46A, 46B sont répartis en deux groupes.

Les moyens d'amortissement à activation immédiate 43A comportent des organes élastiques 44A, 44B d'un premier groupe, dits organes élastiques à activation immédiate, logés sans jeu circonférentiel dans les fenêtres 48, 50. Ils participent à la transmission d'un couple de rotation entre les rondelles de guidage 34A, 34B et le voile 42 dès le début d'une rotation relative entre ces rondelles de guidage 34A, 34B et ce voile 42.

Les moyens d'amortissement à activation conditionnelle 43B comportent des organes élastiques 46A, 46B d'un second groupe, dits organes élastiques à activation conditionnelle, logés sans jeu circonférentiel dans les fenêtres 48 des rondelles de guidage 34A, 34B et avec un jeu circonférentiel prédéterminé dans les fenêtres 50 du voile annulaire 42. Les organes élastiques 46A, 46B du second groupe sont activés de façon conditionnelle pour assurer ici la transmission d'un couple de rotation que lorsque le débattement angulaire entre les rondelles de guidage 16A, 16B et le voile annulaire 24 dépasse l'angle seuil de pré-amortisseur A2. On notera que cet angle seuil de pré-amortisseur A2 correspond au jeu circonférentiel entre les organes élastiques 46A, 46B et les fenêtres 50 du voile 42.

Ainsi les organes élastiques 44A, 44B du premier groupe sont activés de façon immédiate pour transmettre le couple en permanence, et les organes élastiques 46A, 46B du second groupe sont activés de façon conditionnelle pour transmettre le couple uniquement lorsque le débattement angulaire entre les rondelles de guidage 34A, 34B et le voile annulaire 42 est ici supérieure à l'angle seuil de pré-amortisseur A2.

L'ensemble des organes élastiques 26A, 26B, 28A, 28B, 44A, 44B, 46A, 46B permet donc d'obtenir quatre étages d'amortissement des vibrations et des irrégularités de couple. En effet, les organes élastiques 44A, 44B, 46A, 46B du pré-amortisseur A2 définissent des premier 43A et deuxième 43B étages d'amortissement selon qu'ils sont montés sans ou avec jeu circonférentiel dans leurs fenêtres correspondantes. Par ailleurs, en fin de course du pré-amortisseur A2, les organes élastiques 26A, 26B, 28A, 28B de l'amortisseur principal A1 définissent des troisième 25A et quatrième 25B étages d'amortissement selon qu'ils sont montés sans ou avec jeu circonférentiel dans leurs fenêtres correspondantes.

A chaque étage d'amortissement sont associés des moyens de frottement destinés à dissiper l'énergie accumulée dans les organes élastiques. Ainsi, le pré-amortisseur A2 comprend des premiers et deuxièmes moyens de frottement, et l'amortisseur A1 principal comprend des troisièmes et quatrièmes moyens de frottement.

Les premiers moyens de frottement associés au pré-amortisseur A2, dits moyens de frottement à activation immédiate du pré-amortisseur A2, comprennent des surfaces de frottement portées par le moyeu 14 et les paliers 18, 20.

Le palier 18 est solidarisé en rotation avec la première rondelle de guidage 16A de l'amortisseur principal A1 à l'aide de moyens classiques, par exemple des doigts axiaux 52 coopérant par encliquetage avec un contour interne complémentaire 54 de la rondelle de guidage 16A.

Le palier 20, participant au centrage de la seconde rondelle de guidage 16B de l'amortisseur principal A1, est solidarisé en rotation avec cette rondelle de guidage 16B à l'aide de moyens classiques, par exemple des doigts axiaux 56 emboîtés dans des orifices complémentaires 58 de la rondelle de guidage 16B.

Deux surfaces de frottement complémentaires radiales F1, F1' sont portées respectivement par le palier 18 et un épaulement du moyeu 14.

Deux surfaces de frottement complémentaires tronconiques G1, G1' sont portées respectivement par le palier 20 et le moyeu 14.

Les surfaces de frottement complémentaires F1, F1', G1, G1' sont sollicitées élastiquement en contact mutuel par une rondelle élastique 60 de compression axiale en appui entre la première rondelle de guidage 16A de l'amortisseur principal A1 et le palier 18.

La rondelle élastique 60, de préférence en acier à ressort, est solidarisée en rotation avec la première rondelle de guidage 16A de l'amortisseur principal A1 à l'aide de moyens classiques, par exemple par coopération de pattes et encoches complémentaires.

Dans le mode de réalisation représenté, les paliers 18 et 20 sont en matière plastique, éventuellement renforcée de fibres, et exercent un frottement relativement doux sur le moyeu 14.

Les deuxièmes moyens de frottement associés au pré-amortisseur A2, dits moyens de frottement à activation conditionnelle du pré-amortisseur A2, sont activés ici de façon décalés par rapport aux premiers moyens de frottement.

Ces deuxièmes moyens de frottement comprennent des surfaces de frottement portées par un organe de frottement 62, la rondelle de guidage 34A du pré-amortisseur A2 et une rondelle élastique 64 de compression axiale, de préférence en acier à ressort.

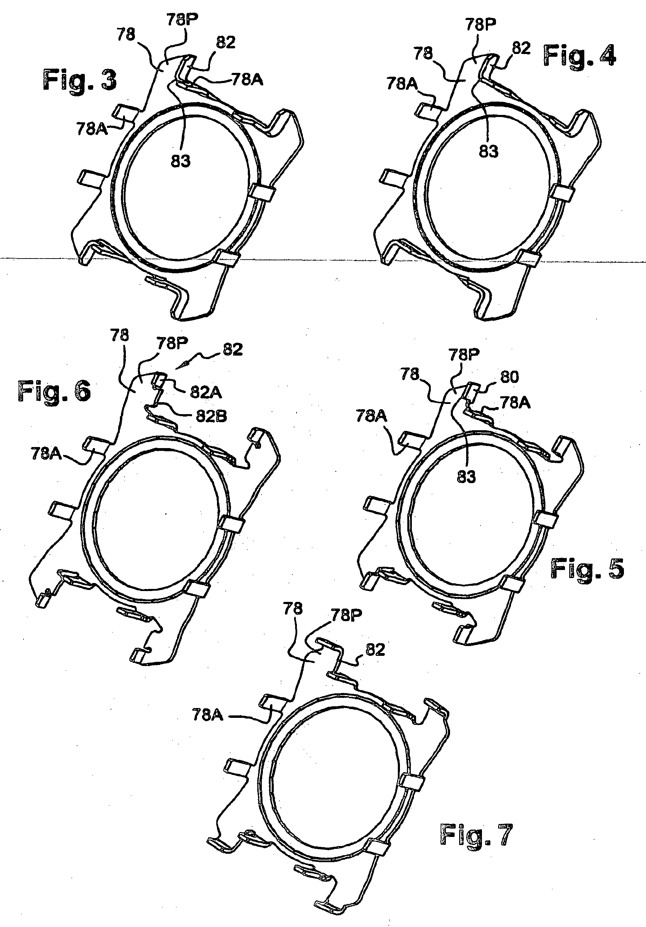

L'organe de frottement 62, représenté plus en détail sur la figure 3, comprend des première 66 et seconde 68 rondelles de frottement coaxiales, juxtaposées et fabriquées respectivement en tôle métallique et en matière plastique.

Ces rondelles de frottement 66, 68 sont solidarisées en rotation l'une avec l'autre à l'aide de moyens classiques comprenant par exemple des encoches 66E, ménagées sur un contour interne de la rondelle en tôle 66, dans lesquelles sont emboîtées des saillies axiales 68S, ménagées sur un contour interne de la rondelle en plastique 68.

L'organe de frottement 62 est intercalé axialement entre la rondelle de guidage 34A du pré-amortisseur A2 et la rondelle élastique 64 de compression axiale.

La rondelle en tôle 66 est munie également, à sa périphérie externe, de deux paires de pattes 66P d'activation de cette rondelle 66. Les pattes d'activation 66P d'une paire sont liées angulairement avec les extrémités de l'un des organes élastiques 46A, 46B correspondant lorsque celui-ci est au repos.

Lorsque le deuxième étage d'amortissement associé au pré-amortisseur A2 est activé, le jeu circonférentiel entre chaque organe élastique 46A, 46B et le contour d'une fenêtre 50 correspondante du voile 42 est annulé, si bien que le voile 42 vient en appui contre une des extrémités de l'organe élastique 46A, 46B pour comprimer cet organe élastique 46A, 46B. Ainsi, la patte d'activation 66P, en contact avec l'extrémité de l'organe élastique 46A, 46B coopérant avec le voile 42, se déplace conjointement avec cette extrémité et le voile 42 pour entraîner en rotation la rondelle en tôle 66 (et donc la rondelle en plastique 68).

Deux surfaces de frottement complémentaires radiales F2, F2' sont portées respectivement par la première rondelle de guidage 34A et la rondelle en tôle 66 de façon à créer un frottement de type plastique/acier.

Deux surfaces de frottement complémentaires radiales G2, G2' sont portées respectivement par la rondelle élastique 64 et la rondelle en plastique 68 de façon à créer un frottement de type plastique/acier.

Les surfaces de frottement complémentaires F2, F2', G2, G2' sont sollicitées élastiquement en contact mutuel par la rondelle élastique 64. En effet, cette rondelle élastique 64 est montée en appui entre la première rondelle de guidage 16A de l'amortisseur principal A1 et l'organe de frottement 62, plus particulièrement la rondelle en plastique 68. La rondelle élastique 64 est solidarisée en rotation avec la rondelle de guidage 16A de l'amortisseur principal A1 à l'aide de moyens classiques, par exemple par coopération de pattes radiales et encoches complémentaires.

On notera que chaque patte 66P est venue de matière avec la rondelle 66 en tôle et est délimitée par des surfaces de contact avec l'organe élastique 46A, 46B correspondant et le voile 42 formées par la tranche de cette rondelle 66 en tôle.

En outre, chaque patte 66P est repliée axialement, de façon à traverser la première rondelle de guidage 34A du pré-amortisseur A2. En variante, les pattes 66P pourraient enjamber la première rondelle de guidage 34A du pré-amortisseur A2.

Les troisièmes moyens de frottement associés à l'amortisseur principal A1, dits moyens de frottement à activation immédiate de l'amortisseur principal, comprennent des surfaces de frottement portées par le palier 20, le voile 24 de l'amortisseur principal A1, la première rondelle de guidage 34A du pré-amortisseur A2 et une rondelle élastique 72 de compression axiale, de préférence en acier à ressort.

Deux surfaces de frottement complémentaires radiales F3, F3' sont portées respectivement par le palier 20 et le voile 24 de l'amortisseur principal A1. Comme déjà précisé ci-dessus, le palier 20 est solidaire en rotation de la rondelle de guidage 16B.

On notera que le palier 20 est un organe de frottement commun aux moyens de frottement à activation immédiate du pré-amortisseur (premier étage) et aux moyens de frottement à activation immédiate de l'amortisseur principal (troisième étage).

Deux surfaces de frottement complémentaires radiales G3, G3' sont portées respectivement par la rondelle de guidage 34A du pré-amortisseur A2 et la rondelle élastique 72.

Les surfaces de frottement complémentaires F3, F3', G3, G3' sont sollicitées élastiquement en contact mutuel par la rondelle élastique 72. En effet, cette rondelle élastique 72 est montée en appui entre la première rondelle de guidage 16A de l'amortisseur principal A1 et la première rondelle de guidage 34A du pré-amortisseur A2. La rondelle élastique 72 est solidarisée en rotation avec la rondelle de guidage 16A de l'amortisseur principal A1 à l'aide de moyens classiques, par exemple par coopération de pattes radiales et encoches complémentaires.

Les quatrièmes moyens de frottement de l'amortisseur principal A1, dits moyens de frottement à activation conditionnelle de l'amortisseur principal A1, associés à l'amortisseur principal A1 sont activés ici de façon décalée par rapport aux troisièmes moyens de frottement.

Ces quatrièmes moyens de frottement comprennent des surfaces de frottement portées par la seconde rondelle de guidage 16B de l'amortisseur principal A1, un organe de frottement 74 et une rondelle élastique 76 de compression axiale, de préférence en acier à ressort.

L'organe de frottement 74 comprend des première 78 et seconde 80 rondelles de frottement coaxiales, sensiblement planes, fabriquées respectivement en tôle métallique et en matière plastique, agencées de part et d'autre du voile 24 de l'amortisseur principal A1.

La première rondelle de frottement 78, représentée plus en détail sur la figure 3, est intercalée axialement entre la seconde rondelle de guidage 16B et le voile annulaire 24 de l'amortisseur principal A1, et entoure le palier 20. La seconde rondelle de frottement 80 est intercalée axialement entre le voile annulaire 24 de l'amortisseur principal A1 et la rondelle élastique 76, et entoure la première rondelle de guidage 34A du pré-amortisseur A2.

On notera que des moyens d'entretoisement 81 sont agencés entre la première rondelle de frottement 78 et la seconde rondelle de frottement 80. Ces moyens d'entretoisement 81 ménagent un dégagement axial J entre deux faces en vis à vis de la première rondelle de frottement 78 et du voile 24 de l'amortisseur principal A1. Ainsi, la première rondelle de frottement 78 comporte une face libre, en regard du voile 24, qui n'est sujette à aucun frottement.

La première rondelle de frottement 78 ne subit alors des frottements qu'avec la seconde rondelle de guidage 16B, et uniquement lorsque les moyens d'amortissement 25B à activation conditionnelle de l'amortisseur principal A1 sont activés.

De préférence, les moyens d'entretoisement 81 comportent des pattes axiales d'entretoisement 78A, venues de matière avec la première rondelle de frottement 78, et munies chacune d'une extrémité de liaison avec la première rondelle de frottement 78 et d'une extrémité libre de coopération avec la seconde rondelle de frottement 80.

Les rondelles de frottement 78, 80 sont solidarisées en rotation l'une avec l'autre à l'aide des pattes axiales d'entretoisement 78A. En effet, les extrémités libres de coopération de ces pattes d'entretoisement 78A sont emboîtées dans des orifices complémentaires 80A, ménagés dans la seconde rondelle de frottement 80.

La première rondelle de frottement 78 comporte huit pattes d'entretoisement 78A disposées sur tout le contour de cette première rondelle de frottement 78 afin d'optimiser la solidarisation en rotation des rondelles de frottement 78, 80.

On notera que les pattes d'entretoisement 78A enjambent le voile 24 sans gêner le mouvement relatif entre les rondelles de guidage 16A, 16B et le voile 24.

La première rondelle de frottement 78 est munie également de deux paires de pattes 78P d'activation de cette rondelle 78, venues de matière avec la première rondelle de frottement 78. Les pattes d'activation 78P d'une paire sont liées angulairement avec les extrémités d'un organe élastique 28A, 28B correspondant lorsque celui-ci est au repos.

Comme on peut le voir sur la figure 3, chaque patte d'activation 78P est délimitée par une surface 82 de contact avec l'organe élastique 28A, 28B correspondant. Plus particulièrement, chaque patte d'activation 78P comporte un siège 83 de contact avec l'organe élastique 28A, 28B correspondant délimité par la surface 82.

Le siège 83 et au moins l'une des pattes d'entretoisement 78A sont formés par un même bord tombé de la rondelle de frottement 78, délimité par une ligne de pliage continue.

Selon une première variante de réalisation de la première rondelle de frottement 78, représentée sur la figure 4, les bords tombés de la première rondelle de frottement 78 ne forment que les sièges 83. En effet, dans ce cas, la première rondelle de frottement 78 ne comporte que quatre pattes d'entretoisement 78A toutes distinctes des sièges 83.

Selon une deuxième variante de réalisation de la première rondelle de frottement 78, représentée sur la figure 5, les sièges 83 et les pattes d'entretoisement 78 A sont formés par des bords tombés de la première rondelle de frottement 78 délimités par des lignes de pliage séparées. On évite ainsi la formation d'un coin plié entre le siège 83 et la patte d'entretoisement 78A, et donc la concentration de contraintes.

Selon une troisième variante de réalisation de la première rondelle de frottement 78, représentée sur la figure 6, la surface de contact 82 délimitant chaque patte d'activation 78P comporte une première partie 82A, formée par un bord tombé de la première rondelle de frottement 78, pour le contact avec le voile 24, et une seconde partie 82B, formée par la tranche de la première rondelle de frottement 78, pour le contact avec l'organe élastique 28A, 28B correspondant.

Selon une quatrième variante de réalisation de la première rondelle de frottement 78, représentée sur la figure 7, la surface de contact 82 de chaque patte d'activation 78P est formée par la tranche de la première rondelle de frottement 78. Dans ce cas, la patte d'activation 78P est repliée axialement afin de former un appui pour le voile 24.

Lorsque le quatrième étage d'amortissement associé à l'amortisseur principal A1 est activé, le jeu circonférentiel entre chaque organe élastique 28A, 28B et le contour d'une fenêtre 32 correspondante du voile 24 est annulé, si bien que le voile 24 vient en appui contre une des extrémités de l'organe élastique 28A, 28B pour comprimer cet organe élastique 28A, 28B. Ainsi, la patte d'activation 78P, en contact avec l'extrémité de l'organe élastique 28A, 28B coopérant avec le voile 24, se déplace conjointement avec cette extrémité et le voile 24 pour entraîner en rotation la première rondelle de frottement 78 (et donc la seconde rondelle de frottement 80).

Deux surfaces de frottement complémentaires radiales F4, F4' sont portées par la seconde rondelle de guidage 16B et la première rondelle de frottement 78.

Deux surfaces de frottement complémentaires radiales G4, G'4 sont portées par la seconde rondelle de frottement 80 et la rondelle élastique 76.

Les surfaces de frottement complémentaires F4, F4', G4, G4' sont sollicitées élastiquement en contact mutuel par la rondelle élastique 76. En effet, cette rondelle élastique 76 est montée en appui entre la première rondelle de guidage 16A de l'amortisseur principal A1 et l'organe de frottement 74, plus particulièrement la seconde rondelle de frottement 80. La rondelle élastique 76 est solidarisée en rotation avec la rondelle de guidage 16A de l'amortisseur principal A1 à l'aide de moyens classiques, par exemple par coopération de pattes radiales et encoches complémentaires.

On décrira ci-dessous les principaux aspects du fonctionnement de l'embrayage à friction 10 illustré sur les figures 1 et 2.

Lorsque le moteur du véhicule automobile fonctionne à un régime de ralenti, l'amortisseur principal A1 se comporte comme un organe rigide en raison de la raideur relativement élevée de ses organes élastiques 44A, 44B, 46A, 46B. Dans ce cas, le couple de rotation fourni par le vilebrequin du moteur est directement transmis du disque de friction 12 au voile annulaire 24 de l'amortisseur principal A1.

Les rondelles de guidage 34A, 34B étant solidaires en rotation du voile 24 de l'amortisseur principal A1, le couple de rotation est également transmis à ces rondelles de guidage 34A, 34B.

Le couple de rotation est alors transmis de ces rondelles de guidage 34A, 34B au voile annulaire 42 du pré-amortisseur A2, et donc au moyeu 14, par l'intermédiaire des organe élastiques 44A, 44B, 46A, 46B.

Les vibrations et irrégularités de couple sont amortis dans un premier temps par les organes élastiques à activation immédiate 44A, 44B du pré-amortisseur A2 et par les premiers moyens de frottement à activation immédiate (surfaces F1, F'1, G1, G'1) associés au pré-amortisseur A2.

Dans le cas ici illustré, lorsque le débattement angulaire entre les rondelles de guidage 34A, 34B et le voile annulaire 42 du pré-amortisseur A2 dépasse l'angle seuil de pré-amortisseur A2, les vibrations et irrégularités sont également amortis par les organes élastiques à activation conditionnelle 46A, 46B du pré-amortisseur A2 et par les seconds moyens de frottements à activation conditionnelle (surfaces F2, F'2, G2 et G'2) associés au pré-amortisseur A2.

Le voile annulaire 24 comporte, en périphérie interne, une denture 241 qui engrène, avec un jeu circonférentiel prédéterminé, avec une denture correspondante 14E de la périphérie externe du moyeu 14. La denture interne 24I du voile 24 forme des saillies sensiblement radiales destinées à coopérer avec des évidements complémentaires externes du moyeu 14.

Lorsque le débattement angulaire entre le voile 42 du pré-amortisseur A2 et les rondelles de guidage 34A, 34B est égal au jeu circonférentiel prédéterminé entre le voile 24 et le moyeu 14, ce voile 24 et ce moyeu 24 coopèrent entre eux par butée. Dans ce cas, le pré-amortisseur A2 n'intervient plus dans la transmission du couple, ce couple étant directement transmis du voile 24 de l'amortisseur principal A1 au moyeu 14.

Le couple est alors transmis du disque de friction 12 au moyeu 14 par l'intermédiaire de l'amortisseur principal A1 uniquement.

Les vibrations et irrégularités du couple sont amortis dans un premier temps par les organes élastiques 26A, 26B à activation immédiate de l'amortisseur principal A1 et par les troisièmes moyens de frottement à activation immédiate (surfaces F3, F3', G3 et G'3) associés à l'amortisseur principal A1.

Dans la cas ici illustré, lorsque le débattement angulaire entre les rondelles de guidage 16A, 16B et le voile annulaire 24 de l'amortisseur principal A1 dépasse l'angle seuil de l'amortisseur principal A1, les vibrations et irrégularités sont également amortis par les organes élastiques à activation conditionnelle 28A, 28B de l'amortisseur principal A1 et par les quatrièmes moyens de frottement à activation conditionnelle (surfaces F4, F'4, G4, G'4) associés à l'amortisseur principal A1.

On forme ainsi quatre étages d'amortissement, qui s'activent successivement en fonction du débattement angulaire entre le disque de friction 12 et le moyeu 14.

Dans une variante, non illustrée, de réalisation de l'invention qui vient d'être décrite, les vibrations et irrégularités sont également amortis par les organes élastiques à activation conditionnelle 46A, 46B du pré-amortisseur A2 et par les seconds moyens de frottements à activation conditionnelle (surfaces F2, F'2, G2 et G'2) associés au pré-amortisseur A2, lorsque le débattement angulaire entre les rondelles de guidage 34A, 34B et le voile annulaire 42 du pré-amortisseur A2 s'effectue selon un sens de rotation prédéterminé, par exemple en rétro.

Dans une autre variante, non illustrée, de réalisation de l'invention qui vient d'être décrite, les vibrations et irrégularités sont également amortis par les organes élastiques à activation conditionnelle 28A, 28B de l'amortisseur principal A1 et par les quatrièmes moyens de frottement à activation conditionnelle (surfaces F4, F'4, G4, G'4) associés à l'amortisseur principal A1, lorsque le débattement angulaire entre les rondelles de guidage 16A, 16B et le voile annulaire 24 de l'amortisseur principal A1 s'effectue selon un sens de rotation prédéterminé, par exemple en rétro.

On notera que l'invention ne se limite pas aux modes de réalisation décrits ci-dessus. En particulier, on pourrait équiper, le cas échéant, le pré-amortisseur de moyens d'amortissement comportant une rondelle de frottement similaire à la rondelle de frottement 78.

## Revendications

1. Embrayage à friction, en particulier pour véhicule automobile, du type comprenant un amortisseur principal (A1) et un pré-amortisseur (A2) couplés en série, le pré-amortisseur (A2) comportant :
- deux rondelles de guidage (34A, 34B), solidaires en rotation entre elles;
- un voile annulaire (42) coaxial aux rondelles de guidage (34A, 34B) et mobile en rotation par rapport aux rondelles de guidage (34A, 34B) ;
- des moyens d'amortissement (43A) à activation immédiate, activés dès que débute le débattement angulaire entre les rondelles de guidage (34A, 34B) et le voile (42) du pré-amortisseur (A2), comportant des moyens de frottement à activation immédiate, et
- des moyens d'amortissement (43B) à activation conditionnelle, activés selon le débattement angulaire entre les rondelles de guidage (34A, 34B) et le voile (42) de ce pré-amortisseur (A2), comportant des moyens de frottement à activation conditionnelle,
l'amortisseur principal (A1) comportant:
- deux rondelles de guidage (16A, 16B), solidaires en rotation entre elles,
- un voile annulaire (24) coaxial aux rondelles de guidage (16A, 16B) et mobile en rotation par rapport aux rondelles de guidage (16A, 16B), et
- des moyens d'amortissement (25A) à activation immédiate, activés dès que débute le débattement angulaire entre les rondelles de guidage (16A, 16B) et le voile (24) de l'amortisseur principal (A1), comportant des moyens de frottement à activation immédiate,
- des moyens d'amortissement (25B) à activation conditionnelle, activés selon le débattement angulaire entre les rondelles de guidage (16A, 16B) et le voile (24) de l'amortisseur principal (A1), comportant des moyens de frottement à activation conditionnelle,
les moyens de frottement à activation conditionnelle de l'amortisseur principal (A1) comprenant :
- des première (78) et seconde (80) rondelles de frottement agencées de part et d'autre du voile (24) de l'amortisseur principal (A1), la face d'une première rondelle de frottement (78) opposée au voile (24) coopérant par frottement avec l'une (16B) des rondelles de guidage de l'amortisseur principal (A1) lorsque les moyens de frottement à activation conditionnelle de l'amortisseur principal (A1) sont activés, et
- des moyens (81) d'entretoisement axial des première (78) et seconde (80) rondelles de frottement,
**caractérisé en ce que** les moyens d'entretoisement (81) ménagent un dégagement axial (J) entre deux faces en vis à vis de la première rondelle de frottement (78) et du voile (24) de l'amortisseur principal (A1), la face de cette première rondelle de frottement (78) en vis-à-vis du voile (24) étant libre et ne subissant aucun frottement.

2. Embrayage selon la revendication 1, **caractérisé en ce que** les moyens de frottement à activation immédiate de l'amortisseur principal (A1) et du pré-amortisseur (A2) comprennent un organe de frottement commun (20).

3. Embrayage selon la revendication 2, **caractérisé en ce que** l'organe de frottement commun (20) est destiné à coopérer par frottement avec,
- d'une part, un moyeu (14) formant un élément de sortie générale de l'embrayage, lorsque les moyens de frottement de pré-amortisseur (A2) à activation immédiate sont activés, et
- d'autre part, le voile (24) de l'amortisseur principal (A1), lorsque les moyens de frottement de l'amortisseur principal (A1) à activation immédiate sont activés.

4. Embrayage selon la revendication 2 ou 3, **caractérisé en ce que** l'organe de frottement commun (20) a une forme générale annulaire, la première rondelle de frottement (78) entourant cet organe de frottement commun (20).

5. Embrayage selon l'une quelconque des revendications précédentes, **caractérisé en ce que** les moyens d'entretoisement (81) forment également des moyens de solidarisation en rotation des première (78) et seconde (80) rondelles de frottement.

6. Embrayage selon l'une quelconque des revendications précédentes, **caractérisé en ce que** les moyens d'entretoisement (81) comportent au moins une patte d'entretoisement (78A), venue de matière avec la première rondelle de frottement (78), munie d'une extrémité de liaison avec la première rondelle de frottement (78) et d'une extrémité libre de coopération avec la seconde rondelle de frottement (80).

7. Embrayage selon l'une quelconque des revendications précédentes, **caractérisé en ce que** les moyens d'amortissement à activation conditionnelle de l'amortisseur principal (A1) comportent un groupe d'organes élastiques à activation conditionnelle (28A, 28B) transmettant un couple entre les rondelles de guidage (16A, 16B) et le voile (24) dudit amortisseur principal (A1) selon le débattement angulaire entre ces rondelles de guidage (16A, 16B) et ce voile (24), la première rondelle de frottement (78) étant munie d'au moins une patte d'activation (78P) de cette rondelle de frottement (78), coopérant angulairement avec un organe élastique à activation conditionnelle (28A, 28B) correspondant, la patte d'activation (78P) étant venue de matière avec la rondelle de frottement (78).

8. Embrayage selon l'une quelconque des revendications précédentes, **caractérisé en ce que** la première rondelle de frottement (78) est sensiblement plane et fabriquée dans une tôle métallique.

9. Embrayage selon les revendications 7 et 8 prises ensemble, **caractérisé en ce que** la patte d'activation (78P) est délimitée par une surface (82) de contact avec l'organe élastique à activation conditionnelle (28A, 28B) correspondant, formée par la tranche de la rondelle de frottement (78).

10. Embrayage selon les revendications 7 et 8 prises ensemble, **caractérisé en ce que** la patte d'activation (78P) comporte un siège (83) de contact avec l'organe élastique à activation conditionnelle (28A, 28B) correspondant formé par un bord tombé de la première rondelle de frottement (78).

11. Embrayage selon les revendications 6 et 10 prises ensemble, **caractérisé en ce que** le siège (83) et la patte d'entretoisement (78A) sont formés par un même bord tombé de la première rondelle de frottement (78) délimité par une ligne de pliage continue.

12. Embrayage selon les revendications 6 et 10 prises ensemble, **caractérisé en ce que** le siège (83) et la patte d'entretoisement (78A) sont formés par des bords tombés de la première rondelle de frottement (78) délimités par des lignes de pliage séparées.

13. Embrayage selon les revendications 7 et 8 prises ensemble, **caractérisé en ce que** la patte d'activation (78P) est délimitée par une surface de contact (82) comportant une première partie (82A), formée par un bord tombé de la première rondelle de frottement (78), de contact avec le voile (24) de l'amortisseur principal (A1), et une seconde partie (82B), formée par la tranche de la première rondelle de frottement (78), de contact avec l'organe élastique à activation conditionnelle correspondant (28A, 28B).

14. Embrayage selon l'une quelconque des revendications précédentes, **caractérisé en ce que** moyens d'amortissement à activation conditionnelle sont agencés de sorte à être activés lorsque le débattement angulaire entre les rondelles de guidage et le voile est supérieur à un angle seuil prédéterminé.

15. Embrayage selon l'une quelconque des revendications précédentes, **caractérisé en ce que** moyens d'amortissement à activation conditionnelle sont agencés de sorte à être activés lorsque le débattement angulaire entre les rondelles de guidage et le voile s'effectue selon un sens de rotation prédéterminé.

## Patentansprüche

1. Reibungskupplung, insbesondere für ein Kraftfahrzeug, jener Art, die einen Hauptdämpfer (A1) und einen Vordämpfer (A2) umfasst, die in Reihe gekoppelt sind, wobei der Vordämpfer (A2) Folgendes umfasst:
- zwei Führungsscheiben (34A, 34B), die drehfest miteinander verbunden sind,
- eine ringförmige Flanschscheibe (42), die koaxial zu den Führungsscheiben (34A, 34B) und drehbeweglich zu den Führungsscheiben (34A, 34B) ist,
- Dämpfungsmittel (43A) mit unmittelbarer Aktivierung, die aktiviert werden, sobald die Winkelauslenkung zwischen den Führungsscheiben (34A, 34B) und der Flanschscheibe (42) des Vordämpfers (A2) beginnt, umfassend Reibungsmittel mit unmittelbarer Aktivierung, und
- Dämpfungsmittel (43B) mit bedingter Aktivierung, die bei einer Winkelauslenkung zwischen den Führungsscheiben (34A, 34B) und der Flanschscheibe (42) dieses Vordämpfers (A2) aktiviert werden, umfassend Reibungsmittel mit bedingter Aktivierung,
wobei der Hauptdämpfer (A1) Folgendes umfasst:
- zwei Führungsscheiben (16A, 16B), die drehfest miteinander verbunden sind,
- eine ringförmige Flanschscheibe (24), die koaxial zu den Führungsscheiben (16A, 16B) und drehbeweglich zu den Führungsscheiben (16A, 16B) ist, und
- Dämpfungsmittel (25A) mit unmittelbarer Aktivierung, die bei einer Winkelauslenkung zwischen den Führungsscheiben (16A, 16B) und der Flanschscheibe (24) des Hauptdämpfers (A1) aktiviert werden, umfassend Reibungsmittel mit unmittelbarer Aktivierung,
- Dämpfungsmittel (25B) mit bedingter Aktivierung, die gemäß dem Winkelausschlag zwischen den Führungsscheiben (16A, 16B) und der Flanschscheibe (24) des Hauptdämpfers (A1) aktiviert werden, umfassend Reibungsmittel mit bedingter Aktivierung,
wobei die Reibungsmittel mit bedingter Aktivierung von einem HauptDämpfer (A1) umfassen:
- erste (78) und zweite (80) Reibscheiben, die beiderseits der Flanschscheibe (24) des Hauptdämpfers (A1) angeordnet sind, wobei die der Flanscheibe (24) gegenüberliegende Fläche einer ersten Reibscheibe (78) durch Reibung mit der einen (16B) der Führungsscheiben des Hauptdämpfers (A1) zusammenwirkt, wenn die Reibungsmittel mit bedingter Aktivierung des Hauptdämpfers (A1) aktiviert sind, und
- Mittel (81) zum axialen Abstützen der ersten (78) und zweiten (80) Reibscheiben,
**dadurch gekennzeichnet, dass** die Mittel zum Abstützen (81) einen axialen Abstand (J) zwischen zwei einander gegenüberliegenden Flächen der ersten Reibscheibe (78) und der Flanschscheibe (24) des Hauptdämpfers (A1) herbeiführen, wobei die der Flanschscheibe (24) gegenüberliegende Fläche dieser Reibscheibe (78) frei ist und keiner Reibung unterliegt.

2. Kupplung nach Anspruch 1, **dadurch gekennzeichnet, dass** die Reibungsmittel mit unmittelbarer Aktivierung des Hauptdämpfers (A1) und des Vordämpfers (A2) ein gemeinsames Reibungsorgan (20) umfassen.

3. Kupplung nach Anspruch 2, **dadurch gekennzeichnet, dass** das gemeinsame Reibungsorgan (20) dazu bestimmt ist, durch Reibung zusammenzuwirken
- einerseits mit einer Nabe (14), die ein allgemeines Ausgangselement der Kupplung bildet, wenn die Reibungsmittel des Vordämpfers (A2) mit unmittelbarer Aktivierung aktiviert sind, und
- andererseits mit der Flanschscheibe (24) des Hauptdämpfers (A1), wenn die Reibungsmittel des Hauptdämpfers (A1) mit unmittelbarer Aktivierung aktiviert sind.

4. Kupplung nach Anspruch 2 oder 3, **dadurch gekennzeichnet, dass** das gemeinsame Reibungsorgan (20) eine allgemein ringförmige Form hat, wobei die erste Reibscheibe (78) dieses gemeinsame Reibungsorgan (20) umgibt.

5. Kupplung nach einem der vorherigen Ansprüche, **dadurch gekennzeichnet, dass** die Abstützungsmittel (81) außerdem Mittel zur drehfesten Verbindung der ersten (78) und zweiten (80) Reibscheiben bilden.

6. Kupplung nach einem der vorherigen Ansprüche, **dadurch gekennzeichnet, dass** die Abstützungsmittel (81) mindestens eine einstückig mit der ersten Reibscheibe (78) ausgeführte Abstützungslasche (78A) umfassen, die mit einem Ende zur Verbindung mit der ersten Reibscheibe (78) und mit einem freien Ende zum Zusammenwirken mit der zweiten Reibscheibe (80) versehen ist.

7. Kupplung nach einem der vorherigen Ansprüche, **dadurch gekennzeichnet, dass** die Dämpfungsmittel mit bedingter Aktivierung des Hauptdämpfers (A1) eine Gruppe von elastischen Organen mit bedingter Aktivierung (28A, 28B) umfassen, die ein Moment zwischen den Führungsscheiben (16A, 16B) und der Flanschscheibe (24) des Hauptdämpfers (A1) gemäß der Winkelauslenkung zwischen den Führungsscheiben (16A, 16B) und der Flanschscheibe (24) übertragen, wobei die erste Reibscheibe (78) mit mindestens einer Aktivierungslasche (78P) dieser Reibscheibe (78) versehen ist, welche winkelmäßig mit einem entsprechenden elastischen Organ mit bedingter Aktivierung (28A, 28B) zusammenwirkt, wobei die Aktivierungslasche (78P) einstückig mit der Reibscheibe (78) ausgeführt ist.

8. Kupplung nach einem der vorherigen Ansprüche, **dadurch gekennzeichnet, dass** die erste Reibscheibe (78) in etwa eben und aus einem Metallblech hergestellt ist.

9. Kupplung nach Anspruch 7 in Verbindung mit Anspruch 8, **dadurch gekennzeichnet, dass** die Aktivierungslasche (78P) durch eine Fläche (82) zum Kontakt mit dem entsprechenden elastischen Organ mit bedingter Aktivierung (28A, 28B) begrenzt ist, die durch einen Abschnitt der Reibscheibe (78) gebildet ist.

10. Kupplung nach Anspruch 7 in Verbindung mit Anspruch 8, **dadurch gekennzeichnet, dass** die Aktivierungslasche (78P) einen Sitz (83) zum Kontakt mit dem entsprechenden elastischen Organ mit bedingter Aktivierung (28A, 28B) umfasst, der durch einen zurückgehenden Rand der ersten Reibscheibe (78) gebildet ist.

11. Kupplung nach Anspruch 6 in Kombination mit Anspruch 10, **dadurch gekennzeichnet, dass** der Sitz (83) und die Abstützungslasche (78A) durch einen gleichen zurückgehenden Rand der ersten Reibscheibe (78) gebildet sind, der durch eine kontinuierliche Biegelinie begrenzt ist.

12. Kupplung nach Anspruch 6 in Verbindung mit Anspruch 10, **dadurch gekennzeichnet, dass** der Sitz (83) und die Abstützungslasche (78A) durch zurückgehende Ränder der ersten Reibscheibe (78) gebildet sind, welche durch separate Biegelinien begrenzt sind.

13. Kupplung nach Anspruch 7 in Kombination mit Anspruch 8, **dadurch gekennzeichnet, dass** die Aktivierungslasche (78P) von einer Kontaktfläche (82) begrenzt ist, die einen durch einen zurückgehenden Rand der ersten Reibscheibe (78) gebildeten ersten Teil (82A) zum Kontakt mit der Flanschscheibe (24) des Hauptdämpfers (A1) sowie einen durch den Abschnitt der ersten Reibscheibe (78) gebildeten zweiten Teil (82B) zum Kontakt mit dem entsprechenden elastischen Organ mit bedingter Aktivierung (28A, 28B) umfasst.

14. Kupplung nach einem der vorherigen Ansprüche, **dadurch gekennzeichnet, dass** die Dämpfungsmittel mit bedingter Aktivierung derart angeordnet sind, dass sie aktiviert werden, wenn die Winkelauslenkung zwischen den Führungsscheiben und der Flanschscheibe größer als ein vorbestimmter Schwellenwinkel ist.

15. Kupplung nach einem der vorherigen Ansprüche, **dadurch gekennzeichnet, dass** die Dämpfungsmittel mit bedingter Aktivierung derart angeordnet sind, dass sie aktiviert werden, wenn die Winkelauslenkung zwischen den Führungsscheiben und der Flanschscheibe in einem vorbestimmten Drehsinn erfolgt.

## Claims

1. Friction clutch, in particular for a motor vehicle, of a type comprising a main damper (A1) and a predamper (A2) coupled in series, the pre-damper (A2) comprising:
- two guide washers (34A, 34B) cohesive in rotation together,
- an annular web (42) coaxial to the guide washers (34A, 34B) and mobile in rotation in relation to the guide washers (34A, 34B),
- damping means (43A) of immediate activation activated from the start of angular deflection between the guide washers (34A, 34B) and the web (42) of the pre-damper (A2), comprising friction means of immediate activation, and
- damping means (43B) of conditional activation activated according to the angular deflection between the guide washers (34A, 34B) and the web (42) of this pre-damper (A2), comprising friction means of conditional activation,
the main damper (A1) comprising:
- two guide washers (16A, 16B) cohesive in rotation together,
- an annular web (24) coaxial to the guide washers (16A, 16B) and mobile in rotation in relation to the guide washers (16A, 16B), and
- damping means (25A) of immediate activation activated from the start of angular deflection between the guide washers (16A, 16B) and the web (24) of the main damper (A1), comprising friction means of immediate activation,
- damping means (25B) of conditional activation activated according to the angular deflection between the guide washers (16A, 16B) and the web (24) of the main damper (A1), comprising friction means of conditional activation,
the friction means of conditional activation of the main damper (A1) comprising:
- first (78) and second (80) friction washers arranged on either side of the web (24) of the main damper (A1), the face of a first friction washer (78) opposite the web (24) cooperating by friction with one (16B) of the guide washers of the main damper (A1) when the friction means of conditional activation of the main damper (A1) are activated, and
- means (81) of axial bracing between the first (78) and second (80) friction washers,
**characterised in that** the bracing means (81) provide an axial clearance (J) between two opposing faces of the first friction washer (78) and the web (24) of the main damper (A1), the face of this first friction washer (78) opposite the web (24) being free and not being subjected to any friction.

2. Clutch according to claim 1, **characterised in that** the friction means of immediate activation of the main damper (A1) and pre-damper (A2) comprise a common friction element (20).

3. Clutch according to claim 2, **characterised in that** the common friction element (20) is intended to cooperate by friction with:
- firstly a hub (14) forming a general output element of the clutch when the friction means of the pre-damper (A2) of immediate activation are activated, and
- secondly the web (24) of the main damper (A1) when the friction means of the main damper (A1) of immediate activation are activated.

4. Clutch according to claim 2 or 3, **characterised in that** the common friction element (20) has a generally annular form, the first friction washer (78) surrounding this common friction element (20).

5. Clutch according to any of the preceding claims, **characterised in that** the bracing means (81) also form means of joining in rotation the first (78) and second (80) friction washers.

6. Clutch according to any of the preceding claims, **characterised in that** the bracing means (81) comprise at least one bracing lug (78A) of the material of the first friction washer (78), fitted with an end linking with the first friction washer (78) and a free end cooperating with the second friction washer (80).

7. Clutch according to any of the preceding claims, **characterised in that** the damping means of conditional activation of the main damper (A1) comprise a group of elastic elements of conditional activation (28A, 28B) transmitting a torque between the guide washers (16A, 16B) and the web (24) according to the angular deflection between these guide washers (16A, 16B) and this web (24), the first friction washer (78) being fitted with at least one activation lug (78P) of this friction washer (78) cooperating angularly with a corresponding elastic element of conditional activation (28A, 28B), the activation lug (78P) being of the material of the friction washer (78).

8. Clutch according to any of the preceding claims, **characterised in that** the first friction washer (78) is approximately flat and made of sheet metal.

9. Clutch according to claims 7 and 8 taken together, **characterised in that** the activation lug (78P) is delimited by a contact surface (82) of the corresponding elastic element of conditional activation (28A, 28B), formed by the section of the friction washer (78).

10. Clutch according to claims 7 and 8 taken together, **characterised in that** the activation lug (78P) comprises a contact seat (83) of the corresponding elastic element of conditional activation (28A, 28B), formed by a recessed edge of the first friction washer (78).

11. Clutch according to claims 6 and 10 taken together, **characterised in that** the seat (83) and the bracing lug (78A) are formed by the same recessed edge of the first friction washer (78) delimited by a continuous fold line.

12. Clutch according to claims 6 and 10 taken together, **characterised in that** the seat (83) and the bracing lug (78A) are formed by recessed edges of the first friction washer (78) delimited by separate fold lines.

13. Clutch according to claims 7 and 8 taken together, **characterised in that** the activation lug (78P) is delimited by a contact surface (82) comprising a first part (82A) formed by a recessed edge of the first friction washer (78) in contact with the web (24) of the main damper (A1) and a second part (82B) formed by the section of the first friction washer (78) in contact with the corresponding elastic element of conditional activation (28A, 28B).

14. Clutch according to any of the preceding claims, **characterised in that** the damping means of conditional activation are arranged so as they are activated when the angular deflection between the guide washers and the web is greater than a predetermined threshold angle.

15. Clutch according to any of the preceding claims, **characterised in that** the damping means of conditional activation are arranged so as to be activated when the angular deflection between the guide washers and the web is performed in a predetermined rotation direction.
